## Europäisches Patentamt

## European Patent Office

## Office européen des brevets

(11) Veröffentlichungsnummer: **0 009 238**
A1

# EUROPÄISCHE PATENTANMELDUNG

(21) Anmeldenummer: **79103515.7**

(22) Anmeldetag: **19.09.79**

(51) Int. Cl.³: **C 08 L 23/12**, C 08 L 23/22, C 08 L 23/06

(30) Priorität: **23.09.78 DE 2841547**

(43) Veröffentlichungstag der Anmeldung: **02.04.80** Patentblatt 80/7

(84) Benannte Vertragsstaaten: **BE DE FR GB IT NL**

(71) Anmelder: **BASF Aktiengesellschaft, Carl-Bosch-Strasse 38, D-6700 Ludwigshafen (DE)**

(72) Erfinder: **Zeitler, Gerhard, Dr., Lessingstrasse 11, D-6711 Hessheim (DE)**
Erfinder: **Moorwessel, Dieter, Dr., Dilsberger Strasse 3-5, D-6800 Mannheim 51 (DE)**
Erfinder: **Pfirrmann, Guenther, Dr., Osloer Weg 38, D-6700 Ludwigshafen (DE)**

(54) **Kälteschlagzähe Formmassen aus einem Polypropylen-Polyisobutylen-Polyäthylen-Gemisch und deren Verwendung für Formteile.**

(57) Die Erfindung betrifft Formmassen, die aus 50 bis 90 Gew.-Teilen Polypropylen der Dichte 0,80 bis 0,90 g/cm³ und dem Schmelzindex 0,1 bis 20 g/10 min., 5 bis 40 Gew.-Teilen Polyisobutylen mit einem Molekulargewicht $\bar{M}_v$ von 300 000 bis 4 000 000, 5 bis 40 Gew.-Teilen Polyäthylen (Dichte = 0,930 bis 0,965 g/cm³, MFI = 0,01 bis 20 g/10 min.) und gegebenenfalls bis 30 Gew.-Teilen üblichen Füllstoffen bestehen sowie die Verwendung der obigen Formmassen für kälteschlagfeste Formteile. Die Formmassen können im Spritzguss zu Formkörpern wie z.B. Autostossstangen verarbeitet werden.

EP 0 009 238 A1

BASF Aktiengesellschaft                              O. Z. 0050/033418

Kälteschlagzähe Formmassen aus einem Polypropylen-Polyiso-
butylen-Polyäthylen-Gemisch und deren Verwendung für Formteile

Die Erfindung betrifft kälteschlagzähe Formmassen, die aus einem Gemisch der Polymerisate Polypropylen, Polyisobutylen und Polyäthylen bestehen sowie die Verwendung derartiger Formmassen für Formteile.

Bei derartigen Formmassen sind Eigenschaften erforderlich, deren Schlagzähigkeitsverhalten bei Temperaturen bis minus 50 °C für bestimmte Anwendungsfälle ausreichend sind.

Es ist bereits bekannt, daß das Schlagzähigkeitsverhalten von Polypropylen bei tiefen Temperaturen durch Copolymerisation von Propylen mit Äthylen bzw. durch Modifizieren von Polypropylen mit Polyisobutylen im Temperaturbereich von -50 bis -10 °C deutlich verbessert werden kann.

Das beigemischte Polyisobutylen verleiht jedoch dem Polypropylen je nach Menge des Zusatzes eine unterschiedliche Steifigkeit und Zähigkeit. Ein Gewinn an Schlagzähigkeit ist dabei stets mit einer Erniedrigung der Steifigkeit verbunden. Auch die Härte des Polypropylens wird durch das Zumischen der Weichkomponente Polyisobutylen verringert.

Fre/sk

Aufgabe der Erfindung war es, kälteschlagfeste Formmassen aufzufinden, welche eine möglichst hohe Steifigkeit bei hoher Schlagzähigkeit besitzen.

Diese Aufgabe wird erfindungsgemäß durch Formmassen gelöst, welche bestehen aus

a) 50 bis 90 Gew.-Teilen Polypropylen der Dichte 0,80 bis 0,90 g/cm$^3$ und des Schmelzindex 0,1 bis 20 g/ 10 min., gemessen nach ASTM-D 1238-65 T bei 230 $^{\circ}$C und 2,16 kg Belastung,

b) 5 bis 40 Gew.-Teilen Polyisobutylen mit einem mittleren viskosimetrischen Molekulargewicht von 300 000 bis 4 000 000, wobei das Viskositätsmittel des Molekulargewichts $\bar{M}_v$ aus der Grenzviskosität $[\eta]$ einer 0,1 gew.%igen Isooctanlösung bei 20 $^{\circ}$C mittels der Beziehung: $[\eta] = 3,06 \cdot 10^{-4} \cdot \bar{M}_v^{0,65}$ berechnet ist;

c) 5 bis 40 Gew.-Teilen Polyäthylen, das eine Dichte von 0,930 bis 0,965 g/cm$^3$ und einen Schmelzindex, gemessen nach ASTM-D 1238-65T bei 190 $^{\circ}$C und 2,16 kg Belastung von 0,01 bis 20 g/10 min. aufweist sowie gegebenenfalls

d) bis zu 30 Gew.-Teilen übliche Füllstoffe, Pigmente, Gleitmittel und Stabilisatoren.

Die erfindungsgemäßen Polymerisate des Polypropylens, Isobutylens und Äthylens sind wohlbekannt und bedürfen daher keiner näheren Erläuterung. Das verwendete Polypropylen enthält üblicherweise 1 bis 20, bevorzugt 2 bis 7 Gew.-% eines Polypropylens, das in siedendem und anschließend wieder auf Zimmertemperatur abgekühltem Xylol, bei einem Gewichtsverhältnis von Polypropylen zu Xylol wie 5 : 95, löslich ist. Das verwendete Polypropylen hat üblicherweise eine Intrinsic-Viskosität $[\eta]$, gemessen in Dekalin bei 130 $^{\circ}$C, im Bereich von 1 bis 10, insb. von 1,2 bis 3,8.

Die Dichten der Polymerisate Polypropylen und Polyäthylen wurden gemessen nach ASTM-D 792-66.

Die erfindungsgemäßen Formmassen werden durch Mischen der Komponenten hergestellt. Hierzu verwendet man z.B. Innenmischer oder Doppelschneckenextruder mit Scherelementen. Die Temperatur der Schmelze liegt dabei zweckmäßig im Bereich von 180 bis 280 $^{\circ}$C, vorzugsweise 200 bis 250 $^{\circ}$C.

Die mit der Erfindung erzielbaren Vorteile bestehen insbesondere darin, daß man aus den erhaltenen Formmassen nach üblichen Verfahren kälteschlagzähe Formteile mit Versprödungstemperaturen von -50 $^{\circ}$C bis -10 $^{\circ}$C und Steifigkeitswerten, einem G-Modul entsprechend, von 500 bis 650 N/mm$^2$ erhalten kann, wobei der G-Modul nach ISO/R 537 gemessen wird. Die Formmassen können im Spritzguß zu Formkörpern, wie z.B. Autostoßstangen, verarbeitet werden.

Beispiel 1

80 Gew.-Teile Polypropylen (Dichte 0,89 g/cm$^3$, MFI = Schmelzindex 1,8 g/10 min), 10 Gew.-Teile Polyisobutylen mit einem Molekulargewicht $\bar{M}_v$ von 2,7.10$^6$ und 10 Gew.-Teile Polyäthylen (Dichte von 0,958 g/cm$^3$ und MFI von 4 g/10 min) wurden in einem beheizten Innenmischer bei 205 $^{\circ}$C 3 Minuten gemischt. Das fertige Endprodukt hatte eine Steifigkeit einem G-Modul (ISO/R 537) entsprechend von 580 N/mm$^2$ und eine Schlagzähigkeit einer Versprödungstemperatur von -25 $^{\circ}$C. Unter Versprödungstemperatur wird dabei die Temperatur verstanden, bei der im Schlagversuch nach ISO/R 179 die Hälfte der Proben bricht. Je tiefer die Temperatur umso höher die Schlagzähigkeit.

## Vergleichsbeispiel 1

Es werden wie im Beispiel 1  80 Gew.-Teile Polypropylen und 20 Gew.-Teile Polyisobuten und kein Polyäthylen gemischt. Man erhält ein Produkt mit einem G-Modul von 490 N/mm$^2$ und eine Versprödungstemperatur von -23 $^{\circ}$C.

## Beispiel 2

60 Gew.-Teile Polypropylen (Dichte 0,89 g/cm$^3$, MFI 52 g/ 10 min.), 20 Gew.-Teile Polyisobutylen mit einem Molekulargewicht $\bar{M}_v$ von 1,35.10$^6$ und 20 Gew.-Teile Polyäthylen (Dichte 0,960 g/cm$^3$, MFI 0,8 g/10 min.) wurden in einem beheizten Innenmischer bei 210 $^{\circ}$C 3 Minuten gemischt. Die Formmasse hatte einen G-Modul von 500 N/mm$^2$ und eine Versprödungstemperatur von -50 $^{\circ}$C.

## Vergleichsbeispiel 2

Es werden wie in Beispiel 2  60 Gew.-Teile Polypropylen und 40 Gew.-Teile Polyisobutylen und kein Polyäthylen für eine Mischung eingesetzt. Man erhält eine Masse mit einem G-Modul von 300 N/mm$^2$ und eine Versprödungstemperatur von -50 $^{\circ}$C.

Es zeigte sich, daß für die erfindungsgemäßen Formmassen kein Abfall der Schlagzähigkeit festgestellt werden konnte, die Steifigkeit mit 500 N/mm$^2$ gegenüber 300 N/mm$^2$ deutlich höher liegt.

## Patentansprüche

1. Formmassen, bestehend aus

   a) 50 bis 90 Gew.-Teilen Polypropylen der Dichte 0,80 bis 0,90 $g/cm^3$ und des Schmelzindex 0,1 bis 20 g/10 min., gemessen nach ASTM-D 1238-65T bei 230 $^{\circ}$C und 2,16 kg Belastung,

   b) 5 bis 40 Gew.-Teilen Polyisobutylen mit einem mittleren viskosimetrischen Molekulargewicht von 300 000 bis 4 000 000, wobei das Viskositätsmittel des Molekulargewichts $\bar{M}_v$ aus der Grenzviskosität einer 0,1 gew.-%igen Isooctanlösung bei 20 $^{\circ}$C mittels der Bezeichnung: $[\eta] = 3,06 \cdot 10^{-4} \cdot M_v^{0,65}$ berechnet ist,

   c) 5 bis 40 Gew.-Teilen Polyäthylen, das eine Dichte von 0,930 bis 0,965 $g/cm^3$ und einem Schmelzindex, gemessen nach ASTM-D 1238-65T bei 190 $^{\circ}$C und 2,16 kg Belastung von 0,01 bis 20 g/10 min. aufweist sowie gegebenenfalls

   d) bis zu 30 Gew.-Teilen übliche Füllstoffe, Pigmente, Gleitmittel und Stabilisatoren.

2. Verwendung der Formmassen nach Anspruch 1 für kälteschlagzähe Formteile mit Versprödungstemperaturen von -50 bis -10 $^{\circ}$C und Steifigkeitswerten, einem G-Modul entsprechend, von 500 bis 650 $N/mm^2$.

Europäisches Patentamt

# EUROPÄISCHER RECHERCHENBERICHT

Nummer der Anmeldung

EP 79103515.7

| | EINSCHLÄGIGE DOKUMENTE | | KLASSIFIKATION DER ANMELDUNG (Int. Cl.) 3 |
|---|---|---|---|
| Kategorie | Kennzeichnung des Dokuments mit Angabe, soweit erforderlich, der maßgeblichen Teile | betrifft Anspruch | |
| X | <u>DE – A – 2 152 746</u> (STAMICARBON)<br>÷ Beispiele 6 – 8 +<br>–– | 1,2 | C 08 L 23/12<br>C 08 L 23/22<br>C 08 L 23/06 |
| | <u>DE – A – 116 050</u> (TISZAI VEGYI KOMBINAT)<br>+ Beispiel 8 +<br>–––– | 1 | |

RECHERCHIERTE SACHGEBIETE (Int. Cl.) 3

C 08 L 23/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | | |
|---|---|---|---|
| Recherchenort<br>WIEN | Abschlußdatum der Recherche<br>04-12-1979 | Prüfer<br>DICHER | |

EPA form 1503.1  06.78